# EUROPEAN PATENT APPLICATION

(11) **EP 2 549 449 A2**
(43) Date of publication of application: **23.01.2013**
(21) Application number: 11183155.8
(22) Date of filing: 28.09.2011
(51) Int. Cl.: G07F 17/32

(54) **Methods and apparatus for providing secure logon to a gaming machine using a mobile device**

(30) Priority: 20.07.2011 US 186708
(71) Applicant: IGT, Reno, NV 89521 (US)
(72) Inventor: Davis, Dwayne A., Reno, NV Nevada 89521 (US); Chavez, Joe, Reno, NV Nevada 89521 (US); Gilliland, Sean M., Reno, NV Nevada 89511 (US)
(74) Representative: Franzolin, Luigi

(57) **Abstract**

Disclosed herein are techniques for communicating between an electronic gaming machine and a mobile computing device. In some implementations, a login code may be transmitted from an electronic gaming machine to a mobile computing device via wireless communication. An account authentication message transmitted from the mobile computing via wireless communication may be received at the electronic gaming machine. The account authentication message may include (a) the login code, (b) an account identification portion that identifies a user account, and (c) an account authentication portion capable of being used to authenticate the user account. Based on the account authentication message, the user account may be authenticated at the electronic gaming machine.

## Description

### CROSS REFERENCE TO RELATED APPLICATIONS

This application claims priority to U.S. Patent Application No. 13/186,708, entitled: "METHODS AND APPARATUS FOR PROVIDING SECURE LOGON TO A GAMING MACHINE USING A MOBILE DEVICE" filed on 20 July 2011, which is hereby incorporated by reference in its entirety and for all purposes.

### TECHNICAL FIELD

The present disclosure relates generally to wager-based gaming machines, and more specifically to communications between gaming machines and mobile devices.

### BACKGROUND

There are a wide variety of associated devices that can be connected to a gaming machine such as a slot machine or video poker machine. Some examples of these devices are lights, ticket printers, card readers, speakers, bill validators, ticket readers, coin acceptors, display panels, key pads, coin hoppers and button pads. Many of these devices are built into the gaming machine or components associated with the gaming machine such as a top box which usually sits on top of the gaming machine.

Typically, utilizing a master gaming controller, the gaming machine controls various combinations of devices that allow a player to play a game on the gaming machine and also encourage game play on the gaming machine. For example, a game played on a gaming machine usually requires a player to input money or indicia of credit into the gaming machine, indicate a wager amount, and initiate a game play. These steps require the gaming machine to control input devices, including bill validators and coin acceptors, to accept money into the gaming machine and recognize user inputs from devices, including key pads and button pads, to determine the wager amount and initiate game play. After game play has been initiated, the gaming machine determines a game outcome, presents the game outcome to the player and may dispense an award of some type depending on the outcome of the game.

### SUMMARY

Various embodiments described or referenced herein are directed to different devices, methods, systems, and computer program products for conducting communications between a mobile computing device and an electronic gaming machine. In some embodiments, devices, methods, systems, and computer program products may be configured or designed for use in a casino environment.

In some implementations, an electronic gaming machine may be provided. The electronic gaming machine may include an input device configured to receive an indication of value for play of a wager-based game in which one or more game outcomes can be provided responsive to a wager. The electronic gaming machine may also include an output device configured to output an indication of value in association with play of the wager-based game. The electronic gaming machine may also include a display screen configured to display video data associated with the wager-based game. The electronic gaming machine may also include one or more processors.

In some implementations, a login code may be transmitted from the electronic gaming machine to a mobile computing device via wireless communication. An account authentication message transmitted from the mobile computing via wireless communication may be received at the electronic gaming machine. The account authentication message may include (a) the login code, (b) an account identification portion that identifies a user account, and (c) an account authentication portion capable of being used to authenticate the user account. Based on the account authentication message, the user account may be authenticated at the electronic gaming machine.

In some implementations, transmitting the login code from the electronic gaming machine to the mobile computing device may comprise presenting indicia on a display screen associated with the electronic gaming machine. The indicia may encode the login code. The indicia may be capable of being read by a camera at the mobile computing device.

In some implementations, the one or more processors may be configured to cause the electronic gaming machine to: determine whether the login code included in the account authentication message matches the login code transmitted from the electronic gaming machine to the mobile computing device. In some implementations, the one or more processors may be configured to cause the electronic gaming machine to determine whether the account authentication portion matches account authentication information associated with the user account identified by the account identification portion.

### BRIEF DESCRIPTION OF THE DRAWINGS

The included drawings are for illustrative purposes and serve only to provide examples of possible structures and process steps for the disclosed inventive systems and methods for conducting communications between a mobile computing device and an electronic gaming machine. These drawings in no way limit any changes in form and detail that may be made to embodiments by one skilled in the art without departing from the spirit and scope of the disclosure.

Figure 1 shows a flow diagram a method 100 of initiating a communication session, performed in accordance with one implementation.

Figure 2 shows a flow diagram of a method 200 of terminating a communication session, performed in accordance with one implementation.

Figure 3 shows a flow diagram of a method 300 for a method of authenticating a player, performed in accordance with one implementation.

Figure 4 shows a system diagram 400 for conducting communications in a gaming environment, configured in accordance with one implementation.

Figures 5, 6A, and 6B shows perspective diagrams of a gaming machine 2, configured in accordance with one implementation.

Figure 7 shows a server-based (sb™) gaming network, configured in accordance with some implementations.

### Detailed Description

Applications of systems and methods according to one or more embodiments are described in this section. These examples are being provided solely to add context and aid in the understanding of the present disclosure. It will thus be apparent to one skilled in the art that the techniques described herein may be practiced without some or all of these specific details. In other instances, well known process steps have not been described in detail in order to avoid unnecessarily obscuring the present disclosure. Other applications are possible, such that the following examples should not be taken as definitive or limiting either in scope or setting.

In the following detailed description, references are made to the accompanying drawings, which form a part of the description and in which are shown, by way of illustration, specific embodiments. Although these embodiments are described in sufficient detail to enable one skilled in the art to practice the disclosure, it is understood that these examples are not limiting, such that other embodiments may be used and changes may be made without departing from the spirit and scope of the disclosure.

In some implementations, a player may use a mobile computing device to communicate with an electronic gaming machine. The player may use the mobile computing device to perform various types of operations related to gaming. For instance, the player may use the mobile computing device to authenticate the player to the gaming machine, to provide user input for playing a game at the gaming machine, to view game outcomes or other game-related information generated by the gaming machine, to interact with a player tracking system, to provide information to social networking systems, to receive information from social networking systems, to communicate with friends or other players, or for any other purpose.

In some implementations, techniques described herein facilitate establishing a secure wireless communication session between the mobile computing device and the electronic gaming machine. A gaming environment such as a casino may include many different gaming machines. Some or all of the gaming machines may act as wireless network endpoints for establishing communication sessions with mobile computing devices. In this situation, a player standing in front of one electronic gaming machine out of many may not know how to connect to the particular electronic gaming machine at which the player is located. One way to solve this problem would be for the electronic gaming machine to display a network address or other identifier associated with the electronic gaming machine so that the player could enter this identifier on the mobile computing device. Then, the mobile computing device could connect wirelessly with the electronic gaming machine associated with the identifier. However, this approach may require from the player a level of technical sophistication that many players do not possess. Also, this approach requires that the player manually enter an identifier at the mobile computing device. Further, this approach provides little or no assurance that the correct identifier is entered at the mobile computing device or that the mobile computing device is connected to the correct electronic gaming machine.

In some implementations, the player may initiate a secure wireless communication session with the electronic gaming machine by first initiating communication using a short-range communication technique. The short-range communication technique may be used to convey an identifier or other information for use in establishing a longer-range wireless communication session. For example, a camera on the mobile computing device may be used to scan a barcode displayed on a display screen at the electronic gaming machine, and the barcode may encode a Wi-Fi SSID associated with the electronic gaming machine. As another example, a near-field radio wave reader on the mobile computing device may be used to read a network address emitted by the electronic gaming machine via near-field radio waves. In this way, the mobile computing device and the electronic gaming machine may be securely linked via a wireless communication session without requiring unnecessary manual operations by the player and with a level of assurance that the mobile computing device is connecting to the correct electronic gaming machine.

In some implementations, the identity of a player at an electronic gaming machine may be determined. By identifying a player at an electronic gaming machine, the owner or manufacturer of the electronic gaming machine may gain useful information into player habits, trends, and other information. Further, the player's identity may be used to provide player tracking services. Also, the player's identity may be used to facilitate digital communication between the player and the player's friends and family.

In some implementations, a player may provide identification and authentication information to an electronic gaming machine. For example, the player may type a username and password into a mechanical or touchscreen keyboard at the electronic gaming machine. However, the placement of such keyboards and the number of patrons in many gaming establishments makes securing the password difficult. If another player sees the username and password entered at the electronic gaming machine, then the account may be compromised. As another example, the player may logon to an electronic gaming machine by presenting a printed ticket with a login code to the electronic gaming machine. However, a printed ticket is generally not associated with a password. Thus, if the ticket is lost, then the account may be compromised.

In some implementations, a player may log in to an electronic gaming machine by using a mobile computing device. By entering the login information at the mobile computing device, the player can better prevent others from viewing the login information as it is entered. Further, the player can easily provide a username, a password, or any other information for securely authenticating the player to the electronic gaming machine. Also, by identifying a player via an application installed at a mobile computing device, information regarding the player may be transmitted directly to the manufacturer of the gaming machine and/or the creator of the application, without requiring the participation of an intermediary such as a casino operator.

In some implementations, the logon procedure may be facilitated by an application running on the mobile computing device. The electronic gaming machine may transmit a logon code to the mobile computing device via near field radio waves, via a barcode scanned by a camera at the electronic gaming machine, or via any other wireless or wired communication technique. The logon code may identify the electronic gaming machine to which the player is logging on. Then, information identifying and authenticating a user account may be determined at the mobile computing device. This information may be provided to the electronic gaming machine, directly to a remote server, or to a remote server via the mobile computing device.

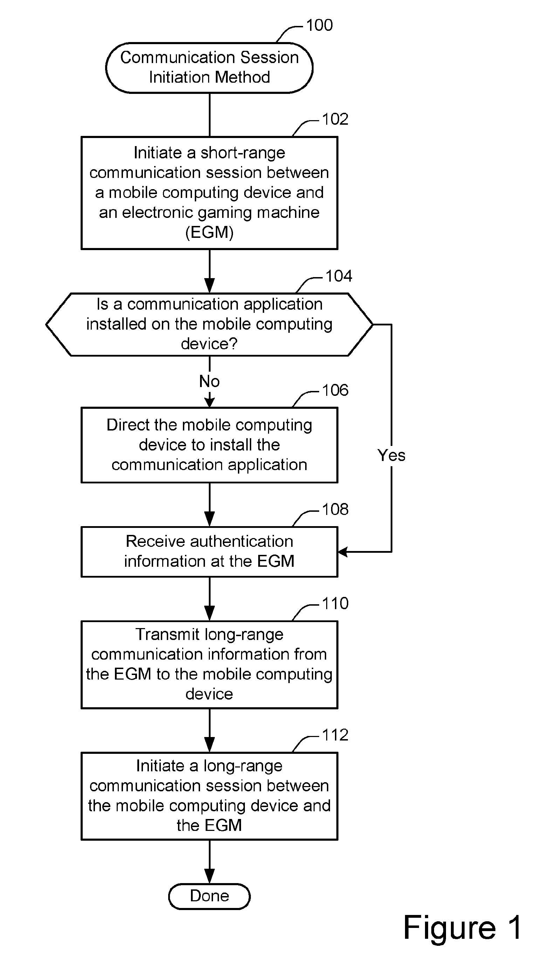

Figure 1 shows a method 100 of initiating a communication session, performed in accordance with one implementation. In some implementations, the method 100 may be performed at an electronic gaming machine in communication with a mobile computing device. By use of the method 100, the mobile computing device and the electronic gaming machine may be securely connected such that the player at the electronic gaming machine can know that the player's mobile computing device is communicating with the correct electronic gaming machine. Likewise, if the player is authenticated at the electronic gaming machine, then software running at the electronic gaming machine may be able to determine that the authenticated player is also the player controlling the mobile computing device.

In some implementations, the method 100 may be used to facilitate the creation of a secure connection between the mobile computing device and the gaming machine without requiring that the player manually enter a network endpoint identifier, manually pair the mobile computing device and the gaming machine via Bluetooth, or perform some other action that may require a relatively high degree of technical sophistication.

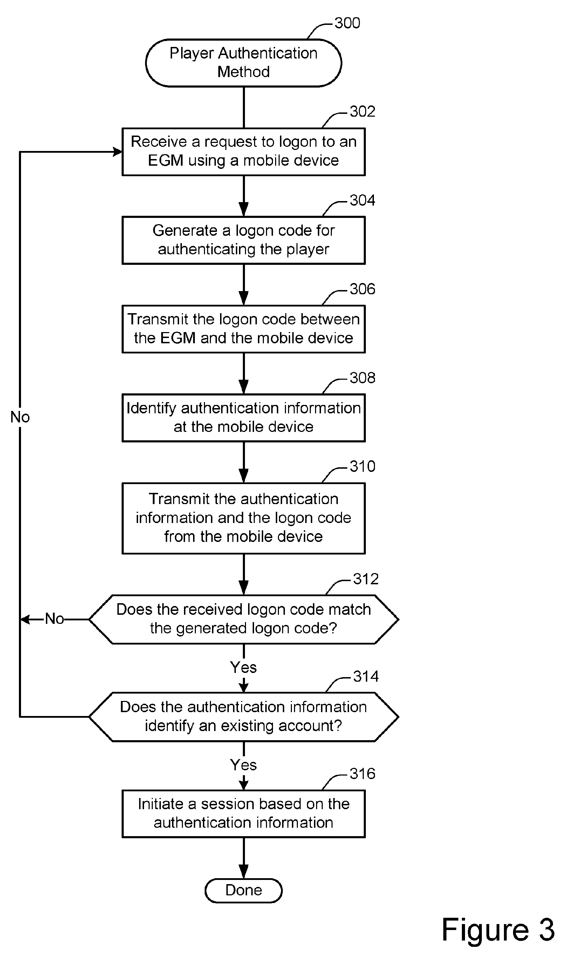

In some implementations, the gaming machine may also establish a connection between the mobile computing device and a player's identity. Techniques for identifying a player are discussed in additional detail with respect to Figure 3.

In some implementations, the electronic gaming machine and the mobile computing device may first communicate via a short-range communication session that requires that the mobile computing device be proximate the electronic gaming machine. Via this short-range communication session, the electronic gaming machine and the mobile computing device can share authentication information, encrypted data, communication session information, network address identifiers, and other information for securely establishing a long-range communication session. Because this information is shared via a short-range connection, software running at the mobile computing device may know that a connection has been established with the correct electronic gaming machine when the long-range communication session is initiated. Likewise, software running at the electronic gaming machine may know that a connection has been established with the correct mobile computing device when the long-range communication session is initiated. For these reasons, a player at the electronic gaming machine can trust that the player's mobile computing device is securely connected with the correct electronic gaming machine.

In some implementations, when the electronic gaming machine and the mobile computing device are communicating, one or both of the two ends may communicate with a backend server to authenticate one or both ends. The backend server may coordinate communications between the electronic gaming machine and the mobile computing device. The backend server may also push updates to the electronic gaming machine, the mobile computing device, or both. The mobile computing device may communicate with the backend server via, for example, 3G wireless communications, 4G wireless communications, or a wireless communication technique such as internal Wi-Fi at the gaming establishment. The electronic gaming machine may communicate with the backend server via any one of various wired and wireless communication techniques.

At 102, a short-range communication session between the mobile computing device and the electronic gaming machine is initiated. In some implementations, the short-range communication session may be conducted via a communication mechanism that requires that the mobile computing device be proximate to the electronic gaming machine. By requiring that the mobile computing device be proximate to the electronic gaming machine, the player may be able to know that the mobile computing device is being linked with the electronic gaming machine at which the player is playing rather than another nearby electronic gaming machine. Further, the proximity of the mobile computing device and the electronic gaming machine when the short-range communication session is established may prevent an attacker from hijacking the player's session by connecting the hijacker's mobile computing device, rather than the player's mobile computing device, to the electronic gaming machine.

In some implementations, various communication techniques may be used to securely conduct short-range communications between the mobile computing device and the electronic gaming machine. In a first example, the electronic gaming machine and the mobile computing device may communicate via infrared lights. In a second example, the electronic gaming machine and the mobile computing device may communicate via sound. In this example, the electronic gaming machine and/or the mobile computing device may generate unique sounds that are detectable by the other device. In a third example, the electronic gaming machine and the mobile computing device may communicate via scanner codes such as barcode, DataMatrix codes, or QR codes. These codes may be generated at the electronic gaming machine and scanned by the mobile computing device, or generated at the mobile computing device and scanned by the electronic gaming machine. In a fourth example, the gaming machine and the mobile computing device may communicate via active or passive near-field radio. The gaming machine, the mobile computing device, or both may be equipped with a near-field radio emitter or receiver.

At 104, a determination is made as to whether a communication application is installed on the mobile computing device. In some implementations, communications between the electronic gaming machine and the mobile computing device may be conducted via a communication application installed at the mobile computing device. The application may provide the mobile computing device with the capabilities to conduct short-range and/or long-range communication sessions with the electronic gaming machine. The application may also provide the mobile computing device with the capability to communicate with a remote server associated with the electronic gaming machine. Additionally, the application may provide the mobile computing device with the capability to perform gaming-related operations such as making bets and altering bet denominations. For instance, the mobile device may act as a virtual control mechanism (e.g. a joystick, a driving wheel, a pistol) for some games. Using the virtual control mechanism, a bonus game utilizing such a control mechanism may be provided at an electronic gaming machine that possess a hardware mechanism for exercising such control.

In some implementations, the application may be associated with a manufacturer of the gaming machine or of a component of the gaming machine. Alternately, or additionally, the application may be associated with a gaming establishment such as a casino.

In some implementations, the application may be configured to facilitate social networking functions. For example, the application may store a username and password associated with the player's social networking account. This information may be communicated to the gaming machine and used by the gaming machine or the mobile computing device to update the player's social networking account.

In some implementations, the application may be configured to facilitate cashless gaming or player tracking operations. Accordingly, the application may store identification, authentication, or permission information for performing such functions. For example, the application may store bank account or credit card access information for transferring funds to the gaming machine. As another example, the application may store a username and password associated with the player's player tracking account.

In some implementations, the determination made at 104 may be made at least in part by determining whether the electronic gaming machine receives a response from a request transmitted by the electronic gaming machine. If the correct response is received, then the electronic gaming machine may assume that the mobile computing device has the communication application installed. If no response or an incorrect response is received, then the electronic gaming machine may assume that the mobile computing device does not have the communication application installed.

In some implementations, the determination made at 104 may be made at least in part at the mobile computing device. For example, the electronic gaming machine may transmit an identifier at 102 directing the mobile computing device to visit a network address such as a webpage. Then, the mobile computing device may determine in communication with the webpage whether the application is installed at the mobile computing device.

In some implementations, the determination made at 104 may be made at least in part by the player. For example, the gaming machine may present a question to the player asking whether the player's mobile computing device has a mobile gaming application installed. The gaming machine may also present a barcode or other insignia that the player could scan to direct the player's mobile computing device to a network location for installing the application. The insignia may be generated dynamically on the gaming machine's display screen or may be printed on the machine.

At 106, the mobile computing device is directed to install the communication application. In some implementations, the electronic gaming machine may transmit a message to the mobile computing device. The message may include any information indicating that the application should be installed at the mobile computing device. For example, the message may include an identifier associated with a network address such as a webpage. The mobile computing device may then visit the webpage to install the communication application.

At 108, authentication information is received at the electronic gaming machine. In some implementations, the authentication information may include any information identifying the player and/or the mobile computing device to the electronic gaming machine. For example, the authentication information may include a mobile computing device identifier, a player tracking number, a randomly generated code, or any other identifying information.

In some implementations, by transmitting authentication information from the mobile computing device to the electronic gaming machine, the long-range communication session established between the electronic gaming machine and the mobile computing device initiated at operation 112 may be made more secure. For example, the electronic gaming machine may again receive authentication information at operation 112. Then, the previously-sent authentication information may be compared against the more recently-sent authentication information. If the two sets of information match, then the mobile computing device communicating with the electronic gaming machine at operation 112 is known to be the same mobile computing device that was communicating with the electronic gaming machine at operation 102.

In some implementations, the authentication information received at the gaming machine at operation 108 may identify a capability of the mobile computing device. For example, the authentication information may identity the a device type, device manufacturer, wireless carrier, battery life, application version, application type, communication capability, or other information associated with the mobile computing device. The gaming machine may use this information to select a particular long-range communication protocol if more than one is available. For example, the gaming machine and the mobile computing device may both be capable of communicating via Bluetooth and Wi-Fi, and the gaming machine may select the communication that is likely to be the most secure and likely to function best.

In some implementations, the player may be presented with a list of features, such as cashless gaming or particular communication protocols, at the gaming machine that are supported by both the gaming machine and the mobile computing device. The player may then activate or deactivate these features as desired. The selected features may then be associated with the mobile computing device or the player's account for later retrieval.

At 110, long-range communication information is transmitted from the electronic gaming machine to the mobile computing device. In some implementations, the long-range communication information may include any information capable of being used for initiating a long-range communication session between the electronic gaming machine and the mobile computing device.

In some implementations, the long-range communication information may include an identifier that identifies a wireless network endpoint associated with the electronic gaming machine. In a first example, the electronic gaming machine may be associated with an endpoint in a Wi-Fi network, and the long-range communication information may include an SSID associated with the network endpoint. In a second example, the electronic gaming machine may be associated with a particular frequency or frequency range for conducting radio communications, and the long-range communication information may identify the frequency or frequency range to the mobile computing device. In a third example, the electronic gaming machine may appear to the mobile computing device as a Bluetooth device, and the gaming machine may transmit a Bluetooth channel and associated connection information to the mobile computing device. In a fourth example, the electronic gaming machine may transmit an IP address to the mobile computing device. In a fifth example, the gaming machine may transmit a list of supported communication protocols and connection information. Then, the mobile computing device or the player may select the communication protocol to use. In a sixth example, the gaming machine may transmit a cryptographic key to the mobile computing device. This shared secret key may be used to securely encrypt future communications between the mobile computing device and the gaming machine. In a seventh example, the gaming machine may transmit information for the mobile computing device to use in initiating a cellular connection with the gaming system.

In some implementations, the long-range communication information may include authentication information for verifying the long-range communication session initiated at operation 112. For example, the long-range communication information may include a unique identifier, such as a random string of characters, that is generated by the electronic gaming machine or at a server in communication with the electronic gaming machine. When the mobile computing device initiates a communication session with the electronic gaming machine, the mobile computing device can include the unique identifier in the initial communication messages. Then, the electronic gaming machine can compare the received identifier to the identifier as transmitted to ensure that the mobile computing device requesting to establish a long-range communication session is the same mobile computing device with which the electronic gaming machine communicated at operation 102.

At 112, a long-range communication session is initiated between the mobile computing device and the electronic gaming machine. In some implementations, the long-range communication session may be initiated via any wireless communication technique that allows a wider range of communication than the short-range communication session initiated at operation 102. For example, the long-range communication session may be initiated via a Wi-Fi connection.

In some implementations, by initiating a wider range communication session, the mobile computing device may be moved to a location less proximate to the electronic gaming machine without terminating the communication. For example, the mobile computing device may be moved to a location such as the player's pocket, bag, or hand while the player is seated or standing near the electronic gaming machine.

In some implementations, the long-range communication session may be initiated in accordance with the long-range communication information transmitted at operation 110. As discussed with respect to operation 110, the electronic gaming machine may communicate information such as a network endpoint address or a unique identifier to the mobile computing device. The mobile computing device may then use this information to establish an authenticated long-range communications session.

In some implementations, the gaming machine may provide an indication as to the connection that is established. For instance, the gaming machine may receive an indication of an avatar or other indicia from the mobile computing device. Then, this information may be used to display a personalized indicator on the gaming machine to show the player that the player's mobile computing device is communicating with the gaming machine. As another example, the gaming machine may display an indicator of the type of connection that is established with the mobile computing device.

In some implementations, different types of communications may affect the feature set offered by the gaming machine. For example, if only a low-security long-range protocol is created, for instance due to a limited set of long range protocols shared by the gaming machine and the mobile computing device, then the gaming machine may not allow cashless gaming or other high security operations to be conducted via the wireless connection.

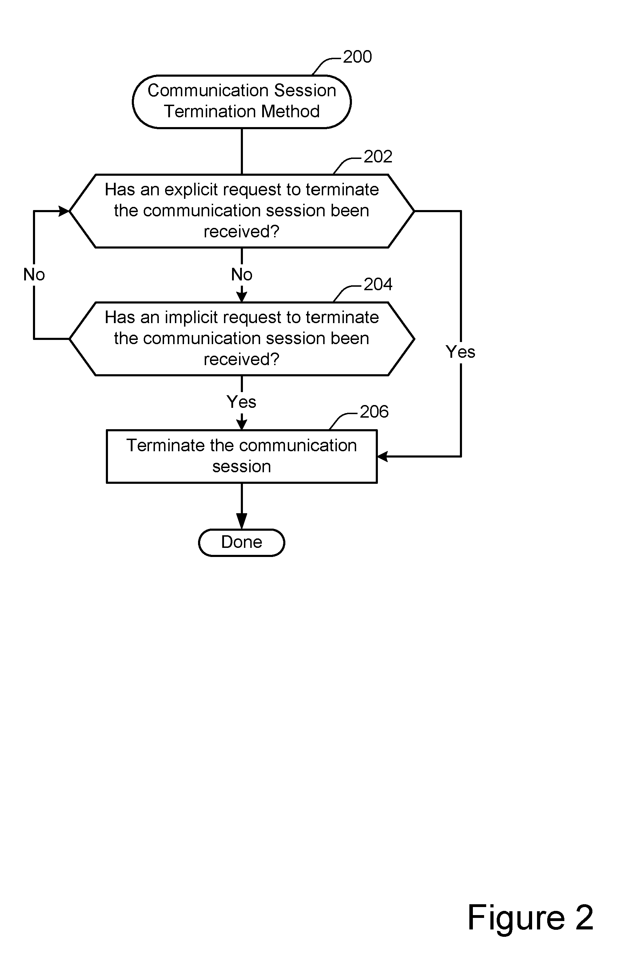

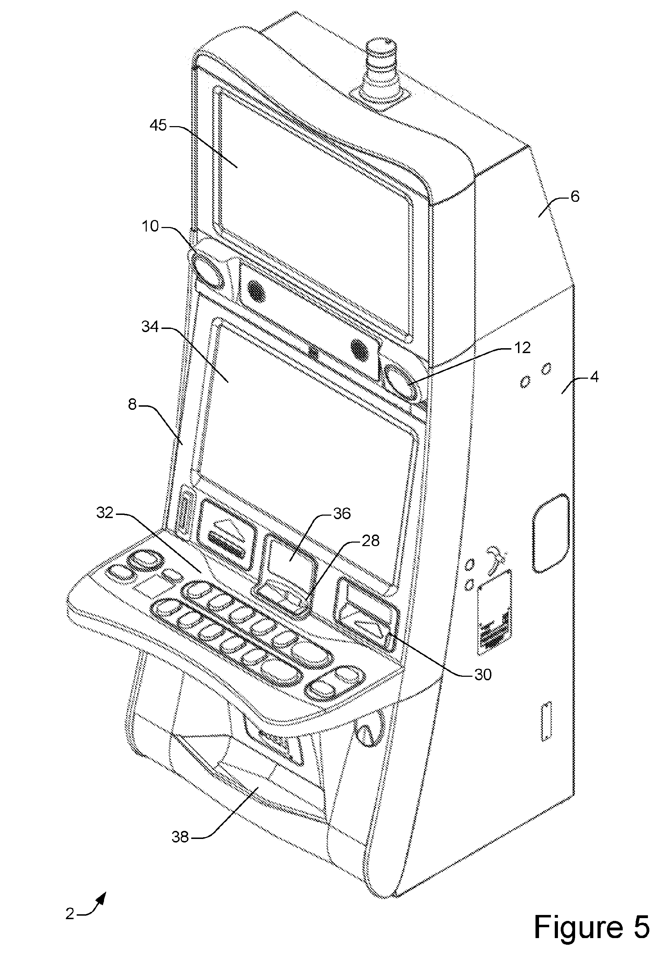

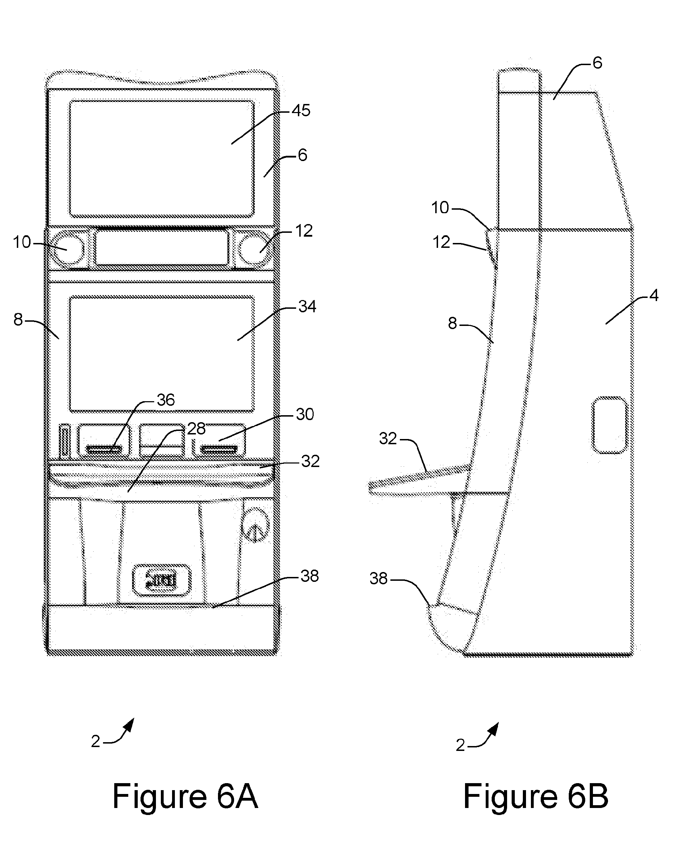

Figure 2 shows a method 200 of terminating a communication session, performed in accordance with one implementation. In some implementations, the method 200 may be used to terminate a long-range or short-range communication session established via the method 100 shown in Figure 1. The method 200 may be performed at an electronic gaming machine, such as the gaming machine 2 shown in Figures 5, 6A, and 6B. Additionally, or alternately, the method 200 may be performed at a mobile computing device configured to communicate with an electronic gaming machine.

In some implementations, the method 200 may be used to ensure that a communication session does not remain in the event that a player explicitly indicates a desire to terminate the communication session, such as by pressing a "disconnect" button. As well, the method 200 may be used to ensure that a communication session does not remain in effect in the event that a player implicitly indicates a desire to terminate the communication session, such as by walking away from the electronic gaming machine.

In some implementations, the method 200 may be run continuously at an electronic gaming machine or a mobile computing device. For example, the method 200 may continuously monitor a status of a communication session at a device.

In some implementations, the method 200 may be initiated when an event is detected. For example, the method 200 may be initiated when a request to terminate a communication session is received. As another example, the method 200 may be initiated when movement of the mobile computing device is detected.

At 202, a determination is made as to whether an explicit request to terminate the communication session has been received. In some implementations, the explicit request to terminate the communication session may include an indication by the player that the communication session should be terminated. The explicit request may be received at either the electronic gaming machine or the mobile computing device. For example, the player may activate a "disconnect" button at the electronic gaming machine or at the mobile computing device.

In some implementations, the explicit request to terminate the communication session may include an indication by the electronic gaming machine or a server that the communication session should be terminated. For example, the electronic gaming machine may determine that the mobile computing device should be de-authorized for security reasons. In this case, the electronic gaming machine may transmit an indication that the communication session should be terminated.

At 204, a determination is made as to whether an implicit request to terminate the communication session has been received. In some implementations, an implicit request to terminate the communication session may be based on any information that indicates that continuing the communication session is no longer desirable and/or possible. The implicit request may be received at either the electronic gaming machine or the mobile computing device.

In some implementations, the implicit request to terminate the communication session may be based on proximity of the mobile computing device to the electronic gaming machine. Various techniques may be used to determine a distance of the mobile computing device to the electronic gaming machine. For example, a GPS sensor on the mobile computing device may be used to convey a location to the electronic gaming machine. As another example, a measure of strength of radio waves or wireless network signal may be determined at either the mobile computing device or the electronic gaming machine.

In some implementations, the implicit request to terminate the communication session may be based on the communication session being interrupted for some reason. For example, the communication session may be interrupted due to interference. In this case, the mobile computing device and the gaming machine may perform any additional steps for terminating the communication session.

In some implementations, the implicit request to terminate the communications session may be based on behavior by the player. For example, the player may request to cash out at the gaming machine. Such a cash out request may be treated as a request to terminate the communication session. As another example, the player may have no credit balance remaining on the gaming machine.

At 206, the communication session is terminated. In some implementations, terminating the communication session may involve any operations for ending the communications between the electronic gaming machine and the mobile computing device. For example, a message indicating the termination of communications may be sent from the electronic gaming machine to the mobile computing device, from the mobile computing device to the electronic gaming machine, or from either the mobile computing device or the electronic gaming machine to a remote server. As another example, the login code may be deleted or marked as used. As yet another example, the player may be logged out of an authenticated session at the electronic gaming machine. If the player was engaged in game play, the game play may be terminated and the player may be cashed out.

Figure 3 shows a flowchart of a method 300 for authenticating a player, performed in accordance with one implementation. In some implementations, the method 300 may be performed at a gaming machine in communication with a mobile computing device. The gaming machine and the mobile computing device may communicate via a wireless communication session. For example, the gaming machine and mobile computing device may communicate via a wireless communication session initiated as described with respect to Figures 1 and 2.

In some implementations, the method 300 may be used to facilitate the secure transmission of authentication information for the player to the gaming machine or a server. If a player enters authentication information at the gaming machine, then the positioning of the input device at the gaming machine may mean that other players could observe the authentication information as the player is entering it. In order to avoid this problem, the authentication information may be provided via the mobile computing device.

In the method 300, a secure logon code is generated. The logon code is transmitted from the mobile computing device when the mobile computing device is used to provide authentication information authenticating the user. By verifying this logon code, the gaming system can ensure that the mobile computing device used to log in to the gaming machine is controlled by the correct player. Also, the gaming system can ensure that the player has logged on to the gaming machine at which the player is playing rather than a different gaming machine in the vicinity.

At 302, a request to logon to a gaming machine using a mobile computing device is received. In some implementations, the request may be received at the gaming machine. Alternately, or additionally, the request may be received at a mobile computing device already connected with the gaming machine. In this case, the mobile computing device may transmit a request to logon to the gaming machine.

In some implementations, the request may be received at a mobile computing device that is not yet communicating with the electronic gaming machine. In this case, the mobile computing device may initiate communications with the gaming machine or with a server in the gaming environment.

At 304, a logon code is generated. In some implementations, the logon code may include any identifier that can be shared between the gaming machine and the mobile computing device so that a secure communication between the two devices can be established. The logon code may include information that uniquely identifies the gaming machine or the mobile computing device. In some implementations, a single logon code may include various types of information, such as random characters, cryptographically generated characters, an identifier associated with the player, and/or an identifier associated with the gaming machine.

In some implementations, the logon code may be valid for only a single authentication. For subsequent authentications, a new logon code may be required. To accomplish this, the logon code may include characters generated randomly and/or characters generated according to a cryptographic sequence. In this way, a unique logon code may be established for the communication session between the gaming machine and the mobile computing device. The logon code may also expire if a designated period of time has passed without the logon code being used. By limiting the effective lifetime of a logon code, the gaming establishment may thwart the ability to compromise a player's account by collecting photos of barcodes on the casino floor as well as attempts to generate counterfeit barcodes for use in hacking accounts.

In some implementations, the logon code may be generated within the gaming system. For example, the logon code may be generated at the gaming machine or at a server in communication with the gaming machine. The logon code may include an identifier associated with the gaming machine. Then, when the logon code is later received at the gaming machine from the mobile computing device, the gaming system can verify that the mobile computing device is authenticating with the correct gaming machine. Thus, when the logon code is generated, the logon code may be stored for later retrieval at the gaming machine or at the server.

In some implementations, the logon code may be generated at the mobile computing device. For example, an application running at the mobile computing device may be configured to generate a new logon code for each gaming session. The application running at the mobile computing device may cryptographically generate the logon code using a cryptographic seed value known to the gaming system. Then, each successive logon code may be predictable by the gaming system so that when the mobile computing device attempts to connect with the gaming system, the gaming system can identify the mobile computing device.

In some implementations, the logon code may include an identifier associated with the player. When logon code is transmitted, it may be possible for an attacker to intercept the logon code. The attacker may then attempt to logon with different credentials from a remote location, such from behind the player. In this case, other players could potentially attempt to hijack the player's session on the gaming machine by logging in and having the player play on their account. Thus, the logon code may include a player tracking number or username. The user may enter this information manually at the gaming machine or provide the information automatically in some way. Typically, the user must provide additional authentication information, such as a PIN or a password, to establish an authenticated session. However, including identification information within the logon code may thwart an attacker's attempt to logon to the player's gaming machine with the hacker's mobile computing device by intercepting the logon code, since the hacker will not know the player's authentication information.

At 306, the logon code is transmitted between the mobile computing device and the gaming machine. In some implementations, transmitting the logon code between the mobile computing device and the gaming machine ensures that the player sends the player's authentication information to the correct gaming machine, and that the gaming machine is receiving authentication information from the correct player. If the logon code is generated at the gaming machine, then the logon code may be transmitted to the mobile computing device. If instead the logon code is generated at the mobile computing device, then the logon code may be transmitted to the gaming machine or to a server within the gaming system.

In some implementations, various techniques may be used to transmit the logon code. For example, the logon code may be encoded as a 2D barcode, displayed on a display screen, and scanned by a camera within the mobile computing device or the gaming machine. As another example, the logon code may be transmitted via a near field radio frequency generator at the mobile computing device or the gaming machine. As yet another example, the logon code may be transmitted via a Wi-Fi connection that exists between the mobile computing device and the gaming machine.

In some implementations, operation 306 may be omitted. For example, the mobile computing device and the gaming machine may already be in communication via an established communication session, and the mobile computing device may be configured to generate the logon code via a cryptographic seed value without input from the gaming machine.

At 308, authentication information for the player is identified at the mobile device. In some implementations, the authentication information may include any information sufficient to identify and authenticate the player to the gaming system. For instance, the authentication information may include a username, a password, a PIN, an account number, or some combination thereof.

In some implementations, the authentication information may be provided manually by the player. For example, the player may enter a password on a user interface component at the mobile computing device. By entering the authentication information at the mobile computing device, the authentication information may be shielded from the view of other people in proximity to the player.

In some implementations, the authentication information may be provided automatically at the mobile computing device. For instance, when the player downloads and installs the gaming communication application, the player may provide authentication information. This authentication information may be stored at the mobile computing device for later retrieval so that the player need not enter the information with each new session.

At 310, the authentication information and the logon code are transmitted from the mobile device to a device within the gaming system. In some implementations, the information may be transmitted directly to the gaming machine. For instance, the gaming machine and the mobile computing device may be in communication via an established communication session. Alternately, or additionally, the information may be transmitted to a server. For instance, the mobile computing device may be in communication with the server, bypassing the gaming machine, via a cellular network such as 3G.

In some implementations, various techniques may be used to transmit the information to the gaming system. For example, the mobile computing device may communicate with the server or the gaming machine via a long-range connection, such as EDGE, 3G, or 4G. As another example, the mobile computing device may communicate via a medium-range wireless communication mechanism, such as Wi-Fi or Bluetooth. As yet another example, the mobile computing device may communicate via a short-range communication mechanism, such as near-field radio communication, optical sensors, or infrared sensors. In this example, the mobile computing device may emit near field radio waves or display a barcode on a display screen that is readable by a camera at the gaming machine. The barcode may be one dimensional, two dimensional, or three dimensional.

In some implementations, additional information may be transmitted from the mobile computing device at operation 310. For example, after the player has authenticated themselves with their mobile device, the system sends a random authentication barcode to the mobile device, which displays the code on the device screen. The player then shows this code to the gaming machine, which may be equipped with a camera. The camera may use the code to verify the logon. As a different example, a similar authentication step may be accomplished via a different communication protocol, such as near-field radio.

In some implementations, the authentication information transmitted at operation 310 may include a cryptographic value that can be verified within the gaming system. The cryptographic value may be generated based on a timestamp at the mobile computing device so that the cryptographic value is only valid within a limited time window. The cryptographic value may be generated based on a seed value received from the gaming system such that the cryptographic value changes with each successive logon attempt.

In some implementations, the authentication information transmitted at operation 310 may include location information. For instance, the mobile device may transmit location coordinates so that the gaming system knows that the mobile device is located proximate to the gaming machine. As another example, sensors within the gaming environment may detect a location of the mobile computing device by using techniques such as radio triangulation.

At 312, a determination is made as to whether the received logon code matches the logon code generated within the gaming system. In some implementations, the determination made at 312 may compare the logon code as a whole. Alternately, the determination made at 312 may compare various identifiers or values included within the logon code.

In some implementations, the determination made at 312 may be made at the gaming machine. For example, the gaming machine may determine whether the logon code received at 310 matches the most recently generated logon code at the gaming machine. If the two values match, then software running at the gaming machine knows that the authentication information was sent by the correct mobile computing device. If instead the two values do not match, then the gaming machine denies the attempt to authenticate the user because even if the authentication information identifies an existing account, the gaming machine cannot verify that the account is associated with the mobile computing device to which the original logon code was transmitted.

In some implementations, the determination made at 312 may be made at a server. For example, the server may compare the received logon code to a database of previously stored logon code. As another example, the server may identify player identification information transmitted from the mobile computing device and use a cryptographic seed value associated with the player to generate a valid login code. If the logon code sent by the mobile computing device matches the logon code generated or retrieved at the server, then the server will determine whether the player's authentication information is correct.

At 314, a determination is made as to whether the authentication information identifies an existing account. In some implementations, the determination made at 314 may attempt to authenticate the user in the same way as would have occurred had the user entered the identification and authentication information directly into the gaming machine. Additionally, or alternately, the gaming system may retrieve player identification information from the logon code and attempt to authenticate the identified user with the authentication information.

In some implementations, if the user is not associated with an existing account, the user may be able to set up a new account. For example, a user may establish a username and password. In some instances, performing monetary transactions with such an account may require authentication with casino personnel. However, the new user may be able to perform lower security operations such as sharing a game status with friends on a social networking website such as Facebook.

In some implementations, a user may be able to utilize one or more identification platform technologies to provide identification information. For example, a player may register using OpenID, WS-Federation, or other such identification platforms. Using such technologies, the player may register with a trusted entity such as a bank, a network service provider such as Yahoo!, or an authentication service such as Verisign. Then, the player may provide registration information or an authentication certificate (e.g., X.509) issued by such an entity to the gaming system or electronic gaming machine. In some instances, the authenticating service or entity may be able to provide or verify player information such as age, citizenship, biometric characteristics, or address. In this way, some or all of the authentication process may be performed automatically and securely at the electronic gaming machine.

At 316, an authenticated session is initiated based on the authentication information. In some implementations, if the authentication is performed at a server, then the server may transmit a message to the gaming machine indicating that the player has logged in. The message may include identification information about the player. Some or all of the identification information may be displayed by the gaming machine.

In some implementations, the method shown in Figure 3 may include usage of bump technologies to further secure the login process. When bump technologies are used, data are coordinate from accelerometers within the mobile computing device and the gaming machine. Then, when the mobile computing device is lightly tapped or bumped against a designated area of the gaming machine, the proximity of the two devices can be verified. For example, the player may initiate the login process on the gaming machine, which waits for the bump on the accelerometer. The player may then start the login process on their mobile device, entering their username and password. At this point, the mobile device may wait for the bump. The mobile device may, for instance, display a "bump" icon or message. When the player bumps the mobile device against the gaming machine, both the mobile device and the gaming machine send the bump information through the network to the bump service, which associates them. Then the bump service then allows the mobile device to communicate with the system to finish the login process.

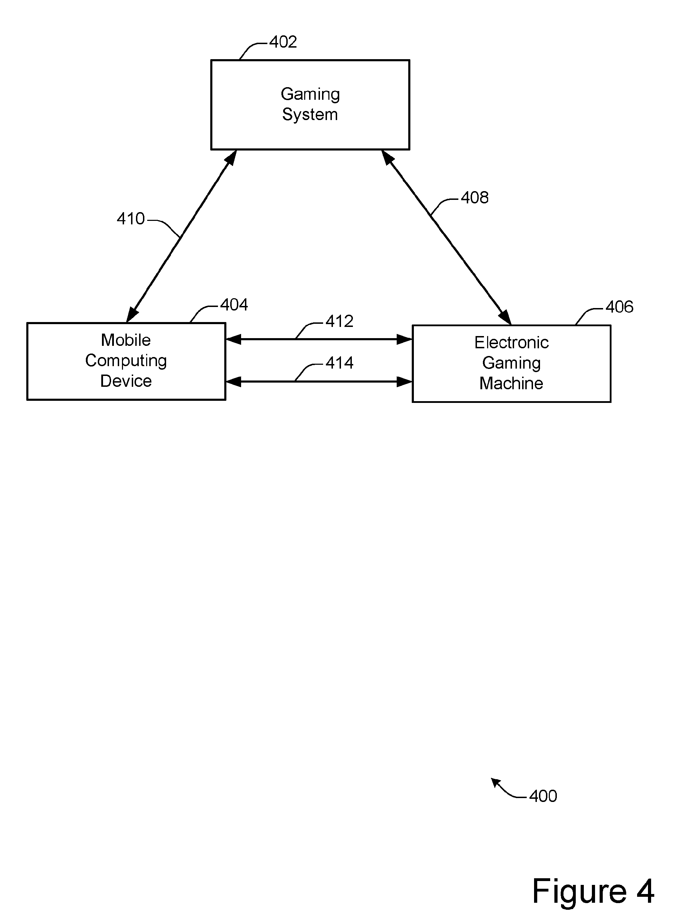

Figure 4 shows a system diagram 400 for conducting communications in a gaming environment, configured in accordance with one implementation. In some implementations, the system 400 may be used to perform one or more of the techniques discussed with respect to Figures 1-3. The system 400 includes a gaming system 402, a mobile computing device 404, an electronic gaming machine 406, and communication links 408, 410, 412, and 414.

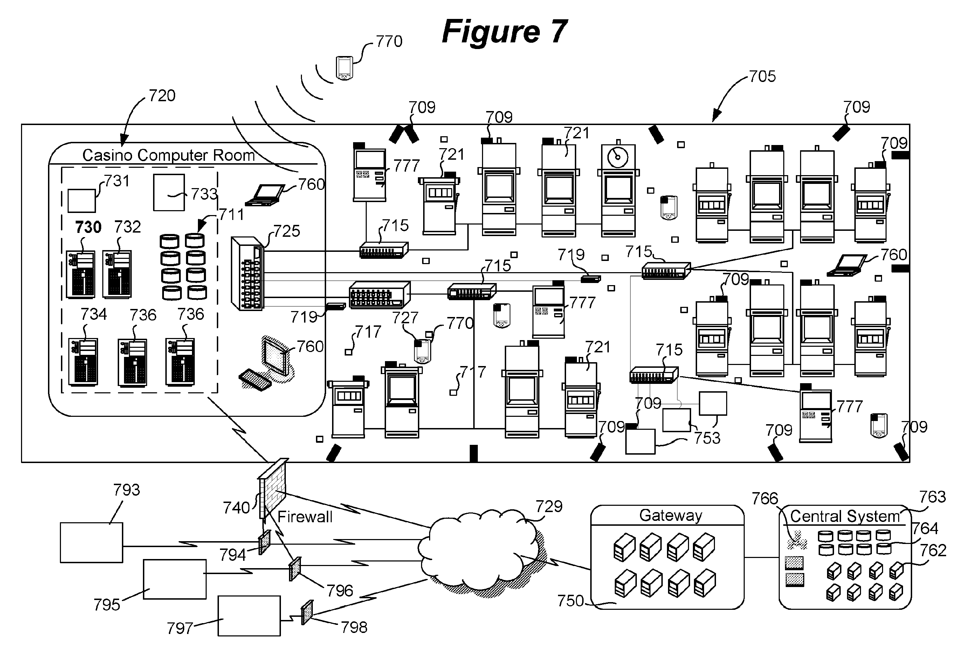

In some implementations, the gaming system 402 may include various types of servers and computing devices for controlling gaming machines. The gaming system 402 may include servers controlled by the gaming property at which the gaming machine 406 is located. Alternately, or additionally, the gaming system 402 may include servers controlled by another entity, such as the gaming machine manufacturer, the gaming machine software developer, or the player tracking system developer. Additional details regarding gaming systems provided in accordance with one implementation are discussed with respect to Figure 7.

In some implementations, the mobile computing device 404 may be any computing device capable of being used to perform gaming-related functions such as authentication, cashless gaming, or user input. The types of mobile computing devices that may be used may include, but are not limited to, mobile phones, smart phones, tablet computers, laptop computers, and personal digital assistances.

In some implementations, the electronic gaming machine 406 may be any gaming machine configured to provide a wager-based game to a player. Additional details regarding an electronic gaming machine provided in accordance with one implementation are discussed with respect to Figures 5A and 5B.

In some implementations, the communication links 408, 410, 412, and 414 may be used to facilitate communication between the gaming machine 406, the gaming system 402, and the mobile computing device 404. In some implementations, not all of these communication links may be present. Also, any one of the communication links may be unidirectional in either direction or bidirectional.

In some implementations, the communication link 408 may be a secure communication link for conducting server-based gaming. For example, the communication link 408 may utilize the Gaming Standards Association's G2S Message Protocol. Other implementations may use IGT's open, Ethernet-based SuperSASⓇ protocol. Still other protocols, including but not limited to Best of Breed ("BOB"), may be used to implement various embodiments of the disclosure.

In some implementations, the communication link 408 may be used to transmit various types of information between the gaming system 402 and the gaming machine 406. For instance, the communication link 408 may be used to transmit player identification information, player authentication information, logon codes, and other such information as described with respect to Figures 1-3.

In some implementations, the communication link 410 may facilitate communication between the gaming system 402 and the mobile computing device 404. Various types of communication techniques may be used to establish the communication link 410. These communication techniques may include, but are not limited to, mobile phone communication technologies, cellular data communication technologies (e.g., 3G, 4G, EDGE), and wireless networking technologies (e.g., Wi-Fi, Bluetooth).

In some implementations, the mobile computing device 410 and the gaming system 402 may communicate via message passing or other direct communication techniques. Alternately, or additionally, the mobile computing device 410 and the gaming system 402 may communicate via a Web-based interface. For instance, the gaming system 402 may provide a webpage that may be accessed by the mobile computing device 410 to download software, receive security tokens, provide authentication information, or perform other functions.

In some implementations, the communication link 410 may be used to transmit various types of information between the mobile computing device 404 and the gaming system 402. For example, the mobile computing device 404 may download a gaming application from a digital store not shown in the system 400. Alternately, the mobile device 404 may download the gaming application the gaming system 402. The mobile computing device 404 may periodically check with the gaming system 402 or the digital store to download updates to the application.

In some implementations, the mobile computing device 404 may communicate with the gaming system 402 to link the mobile computing device 404 with the player's account. The player may provide identification and authentication information to the gaming system 402 via the mobile computing device 410. Then, the gaming system may store the received information so that when the mobile computing device 404 later communicates with the gaming system 402 or the gaming machine 406, the gaming system may be capable of identifying the player. In some instances, the gaming system 402 may provide a token or other identifier to the mobile computing device. The token may be used to facilitate subsequent logons at a gaming machine such as the gaming machine 406. The token may need to be periodically renewed by further communication between the mobile computing device 404 and the gaming system 402.

In some implementations, the mobile computing device 404 may communicate with the gaming system 402 when the player is attempting to use the mobile computing device 404 to communicate with the gaming machine 406. In this case, the mobile computing device 404 may communicate with the gaming system 402 in order to provide additional security or to transmit authentication information for analysis at a server. Alternately, such communications may be conducted at least in part via the gaming machine 406.

In some implementations, the short-range communication link 412 may be used to conduct short-range communications between the mobile computing device 404 and the gaming machine 406. The short-range communication link 412 may be used in order to verify that the mobile computing device 404 is communicating with the gaming machine at which the player is playing rather than with a different, nearby gaming machine. Likewise, the short-range communication link 412 may be used in order to verify that the gaming machine 406 is communicating with the player's mobile computing device rather than a different, nearby mobile computing device, such as a mobile computing device being used by a malicious attacker trying to hijack the player's session or steal the player's information.

In some implementations, various types of information may be transmitted via the short-range communication link 412. For example, long-range communication session information for establishing a long-range communication session may be transmitted. By transmitting this information via the short-range communication link, the integrity of the long-range communication session may be verified. As another example, information identifying the player, such as a username or player tracking number, may be transmitted. By transmitting such information via the short-range communication link 412, the devices and systems shown in Figure 4 may be better able to verify that subsequent communications are transmitted from a mobile device associated with the player rather than with a different mobile device. As yet another example, information authentication the player, such as a password, may be transmitted. By transmitting authentication information via a short-range communication link, the chances that the communication will be intercepted may be reduced.

In some implementations, various types of communication techniques may be used to conduct the short-range communications. For example, the mobile computing device 404 and the gaming machine 406 may communicate via active or passive near-field radio. As another example, one device may display a one, two, or three dimensional barcode that may be read by a camera at the other device. As yet another example, the mobile computing device 404 and the gaming machine 406 may communicate via a protocol based on infrared lights, visible lights, sounds, or any other technique for transmitting information.

In some implementations, the long-range communication link 414 may be used to conduct long-range communications between the mobile computing device 404 and the gaming machine 406. The long-range communication link 414 may be used in order to allow the mobile computing device 404 to communicate with the gaming machine 406 while the mobile computing device 404 is less proximate to the gaming machine than is the case when the gaming machine 406 and the mobile computing device 404 are communicating via the short-range communication link 412. For example, the player may hold the mobile computing device while the player is standing or sitting in front of the gaming machine. As another example, the player may carry the mobile computing device while the player visits a restroom, a bar, a gaming kiosk, or other location at a gaming property.

In some implementations, the long-range communication link 414 may be established based on information shared via the short-range communication link 412. In this way, the integrity of the long-range communication link 414 may be verified. Various types of information may be transmitted via the long-range communication link 414. This information may include, but is not limited to: user input for the gaming machine 406, player identification information, player authentication information, cashless gaming information, player tracking information, and player biometric information.

In some implementations, various types of communication techniques may be used to conduct the long-range communications. These communication techniques may include, but are not limited to, mobile phone communication technologies, cellular data communication technologies (e.g., 3G, 4G, EDGE), and wireless networking technologies (e.g., Wi-Fi, Bluetooth).

Figures 5, 6A, and 6B show perspective diagrams of a gaming machine 2, configured in accordance with one implementation. As illustrated in Figures 5, 6A, and 6B, gaming machine 2 includes a main cabinet 4, which generally surrounds the machine interior and is viewable by users. The main cabinet includes a main door 8 on the front of the machine, which opens to provide access to the interior of the machine.

In some implementations, the electronic gaming machine may include any of a plurality of devices. For example, the electronic gaming machine may include a ticket printer that prints bar-coded tickets, a key pad for entering player tracking information, a display (e.g., a video display screen) for displaying player tracking information, a card reader for entering a magnetic striped card containing player tracking information, and any other devices. The ticket printer may be used to print tickets for a cashless ticketing system. In Figures 5, 6A, and 6B, attached to the main door is a payment acceptor 28, a bill validator 30, and a coin tray 38. The payment acceptor may include a coin slot and/or a payment, note, or bill acceptor, where the player inserts money, coins, tokens, or other types of payments.

In some implementations, devices such as readers or validators for credit cards, debit cards, smart cards, or credit slips may facilitate payment. For example, a player may insert an identification card into a card reader of the gaming machine. The identification card may be a smart card coded with a player's identification, credit totals (or related data) and other relevant information. As another example, a player may carry a portable device, such as a cell phone, a radio frequency identification tag or any other suitable wireless device. The portable device may communicates a player's identification, credit totals (or related data), and/or any other relevant information to the gaming machine. As yet another example, money may be transferred to a gaming machine through electronic funds transfer. When a player funds the gaming machine, a logic device coupled to the gaming machine may determine the amount of funds entered and display the corresponding amount on a display device.

In some implementations, attached to the main door is a plurality of player-input switches or buttons 32. The input switches can include any suitable devices which enables the player to produce an input signal which is received by the processor. The input switches may include a game activation device that may be used by the player to start any primary game or sequence of events in the gaming machine. The game activation device can be any suitable play activator such as a "bet one" button, a "max bet" button, or a "repeat the bet" button. In some instances, upon appropriate funding, the gaming machine may begin the game play automatically. Alternately, the gaming machine may automatically activate game play after detecting user input via the game activation device.

In some implementations, one input switch is a cash-out button. The player may push the cash-out button and cash out to receive a cash payment or other suitable form of payment corresponding to the number of remaining credits. For example, when the player cashes out, the player may receive the coins or tokens in a coin payout tray. As another example, the player may receive other payout mechanisms such as tickets or credit slips redeemable by a cashier (or other suitable redemption system) or funding to the player's electronically recordable identification card. As yet another example, funds may be transferred from the gaming machine to the player's smart card.

In some implementations, one input switch is a touch-screen coupled with a touch-screen controller, or some other touch-sensitive display overlay to enable for player interaction with the images on the display. The touch-screen and the touch-screen controller may be connected to a video controller. A player may make decisions and input signals into the gaming machine by touching the touch-screen at the appropriate places. One such input switch is a touch-screen button panel.

In some implementations, the gaming machine may include communication ports for enabling communication of the gaming machine processor with external peripherals, such as external video sources, expansion buses, game or other displays, a SATA port, a key pad, or a network interface for communicating via a network.

In some implementations, the electronic gaming machine may include one or more display devices. For example, the electronic gaming machine 2 includes a display device 34 and an information panel 36. The display device 34 and the information panel 36 may each include any of a cathode ray tube, an LCD, a light emitting diode (LED) based display, an organic light emitting diode (OLED) based display, a polymer light emitting diode (PLED) based display, an SED based-display, an E-ink display, a plasma display, a television display, a display including a projected and/or reflected image, or any other suitable electronic display device.

In some implementations, the display devices at the gaming machine may include one or more electromechanical devices such as one or more rotatable wheels, reels, or dice. The display device may include an electromechanical device adjacent to a video display, such as a video display positioned in front of a mechanical reel. The display devices may include dual-layered or multi-layered electromechanical and/or video displays that cooperate to generate one or more images. The display devices may include a mobile display device, such as a smart phone or tablet computer, that allows play of at least a portion of the primary or secondary game at a location remote from the gaming machine. The display devices may be of any suitable size and configuration, such as a square, a rectangle or an elongated rectangle.

In some implementations, the display devices of the gaming machine are configured to display game images or other suitable images. The images may include symbols, game indicia, people, characters, places, things, faces of cards, dice, and any other images. The images may include a visual representation or exhibition of the movement of objects such as mechanical, virtual, or video reels and wheel. The images may include a visual representation or exhibition of dynamic lighting, video images, or any other images.

In some implementations, the electronic gaming machine may include a top box. For example, the gaming machine 2 includes a top box 6, which sits on top of the main cabinet 4. The top box 6 may house any of a number of devices, which may be used to add features to a game being played on the gaming machine 2. These devices may include speakers 10 and 12, display device 45, and any other devices. Further, the top box 6 may house different or additional devices not illustrated in Figures 5, 6A, and 6B. For example, the top box may include a bonus wheel or a back-lit silk screened panel which may be used to add bonus features to the game being played on the gaming machine. As another example, the top box may include a display for a progressive jackpot offered on the gaming machine. As yet another example, the top box may include a smart card interaction device. During a game, these devices are controlled and powered, at least in part, by circuitry (e.g. a master gaming controller) housed within the main cabinet 4 of the machine 2.

In some implementations, speakers may be mounted and situated in the cabinet with an angled orientation toward the player. For instance, the speakers 10 and 12 located in top box area 6 of the upper region of gaming machine 2 may be mounted and situated in the cabinet with an angled orientation down towards the player and the floor. In one example, the angle is 45 degrees with respect to the vertical, longitudinal axis of machine 2. In another example, the angle is in a range of 30-60 degrees. In another example, the angle is any angle between 0 and 90 degrees. In some implementations, the angle of speakers in the gaming machine may be adjustable. For instance, speakers may be adjusted to face in a direction more closely approximating an estimated position of a player's head or facial features.

The bill validator 30, player-input switches 32, display screen 34, and other gaming devices may be used to present a game on the game machine 2. The devices may be controlled by code executed by a master gaming controller housed inside the main cabinet 4 of the machine 2. The master gaming controller may include one or more processors including general purpose and specialized processors, such as graphics cards, and one or more memory devices including volatile and non-volatile memory. The master gaming controller may periodically configure and/or authenticate the code executed on the gaming machine.

In some implementations, the gaming machine may include a sound generating device coupled to one or more sounds cards. The sound generating device may include one or more speakers or other sound generating hardware and/or software for generating sounds, such as playing music for the primary and/or secondary game or for other modes of the gaming machine, such as an attract mode. The gaming machine may provide dynamic sounds coupled with attractive multimedia images displayed on one or more of the display devices to provide an audio-visual representation or to otherwise display full-motion video with sound to attract players to the gaming machine. During idle periods, the gaming machine may display a sequence of audio and/or visual attraction messages to attract potential players to the gaming machine. The videos may also be customized for or to provide any appropriate information.

In some implementations, the gaming machine may include a sensor, such as a camera that is selectively positioned to acquire an image of a player actively using the gaming machine and/or the surrounding area of the gaming machine. The sensor may be configured to capture biometric data about a player in proximity to the gaming machine. The biometric data may be used to implement mechanical and/or digital adjustments to the gaming machine. Alternately, or additionally, the sensor may be configured to selectively acquire still or moving (e.g., video) images. The display devices may be configured to display the image acquired by the camera as well as display the visible manifestation of the game in split screen or picture-in-picture fashion. For example, the camera may acquire an image of the player and the processor may incorporate that image into the primary and/or secondary game as a game image, symbol, animated avatar, or game indicia.

Gaming machine 2 is but one example from a wide range of gaming machine designs on which the techniques described herein may be implemented. For example, not all suitable gaming machines have top boxes or player tracking features. Further, some gaming machines have only a single game display ― mechanical or video, while others may have multiple displays.

Figure 7 shows a server-based (sb™) gaming network, configured in accordance with some implementations. Those of skill in the art will realize that this architecture and the related functionality are merely examples and that the present disclosure encompasses many other such embodiments and methods.

Here, casino computer room 720 and networked devices of a gaming establishment 705 are illustrated. Gaming establishment 705 is configured for communication with central system 763 via gateway 750. Gaming establishments 793 and 795 are also configured for communication with central system 763.

In some implementations, gaming establishments may be configured for communication with one another. In this example, gaming establishments 793 and 795 are configured for communication with casino computer room 720. Such a configuration may allow devices and/or operators in casino 705 to communicate with and/or control devices in other casinos. In some such implementations, a server in computer room 720 may control devices in casino 705 and devices in other gaming establishments. Conversely, devices and/or operators in another gaming establishment may communicate with and/or control devices in casino 705.

For example, a server of casino 705 or central system 763 may be provisioned with relatively more advanced software (e.g., 3-D facial recognition software) for patron identification than servers of other networked locations. Such a server may process patron identification requests from devices in casino 705 as well as patron identification requests from devices in gaming establishments 793 and 795.

Here, gaming establishment 797 is configured for communication with central system 763, but is not configured for communication with other gaming establishments. Some gaming establishments (not shown) may not be in communication with other gaming establishments or with a central system. Gaming establishment 705 includes multiple gaming machines 721, each of which is part of a bank 710 of gaming machines 721. In this example, gaming establishment 705 also includes a bank of networked gaming tables 753. However, the present disclosure may be implemented in gaming establishments having any number of gaming machines, gaming tables, etc. It will be appreciated that many gaming establishments include hundreds or even thousands of gaming machines 721 and/or gaming tables 753, not all of which are necessarily included in a bank and some of which may not be connected to a network. At least some of gaming machines 721 and/or mobile devices 770 may be "thin clients" that are configured to perform client-side methods as described elsewhere herein.

Some configurations can provide automated, multi-player roulette, blackjack, baccarat, and other table games. The table games may be conducted by a dealer and/or by using some form of automation, which may include an automated roulette wheel, an electronic representation of a dealer, etc. In some such implementations, devices such as cameras, radio frequency identification devices, etc., may be used to identify and/or track playing cards, chips, etc. Some of gaming tables 753 may be configured for communication with individual player terminals (not shown), which may be configured to accept bets, present an electronic representation of a dealer, indicate game outcomes, etc.

Gaming establishment 705 also includes networked kiosks 777. Depending on the implementation, kiosks 777 may be used for various purposes, including but not limited to cashing out, prize redemption, redeeming points from a player loyalty program, redeeming "cashless" indicia such as bonus tickets, smart cards, etc. In some implementations, kiosks 777 may be used for obtaining information about the gaming establishment, e.g., regarding scheduled events (such as tournaments, entertainment, etc.), regarding a patron's location, etc. Software related to such features may be provided and/or controlled, and related data may be obtained and/or provided, according to the present disclosure. For example, in some implementations of the disclosure, kiosks 777 may be configured to receive information from a patron, e.g., by presenting graphical user interfaces.

In this example, each bank 710 has a corresponding switch 715, which may be a conventional bank switch in some implementations. Each switch 715 is configured for communication with one or more devices in computer room 720 via main network device 725, which combines switching and routing functionality in this example. Although various communication protocols may be used, some preferred implementations use the Gaming Standards Association's G2S Message Protocol. Other implementations may use the open, Ethernet-based SuperSASⓇ protocol, which is available from IGT. Still other protocols, including but not limited to Best of Breed ("BOB"), may be used to implement various embodiments of the disclosure. IGT has also developed a gaming-industry-specific transport layer called CASH that rides on top of TCP/IP and offers additional functionality and security.

Here, gaming establishment 705 also includes an RFID network, implemented in part by RFID switches 719 and multiple RFID readers 717. An RFID network may be used, for example, to track objects (such as mobile gaming devices 770, which include RFID tags 727 in this example), patrons, etc., in the vicinity of gaming establishment 705.

As noted elsewhere herein, some implementations of the disclosure may involve "smart" player loyalty instruments, such as player tracking cards, which include an RFID tag. Accordingly, the location of such RFID-enabled player loyalty instruments may be tracked via the RFID network. In this example, at least some of mobile devices 770 may include an RFID tag 727, which includes encoded identification information for the mobile device 770. Accordingly, the locations of such tagged mobile devices 770 may be tracked via the RFID network in gaming establishment 705. Other location-detection devices and systems, such as the global positioning system ("GPS"), may be used to monitor the location of people and/or devices in the vicinity of gaming establishment 705 or elsewhere.

Various alternative network topologies can be used to implement different embodiments of the disclosure and/or to accommodate varying numbers of networked devices. For example, gaming establishments with large numbers of gaming machines 721 may require multiple instances of some network devices (e.g., of main network device 725, which combines switching and routing functionality in this example) and/or the inclusion of other network devices not shown in Figure 7. Some implementations of the disclosure may include one or more middleware servers disposed between kiosks 777, RFID switches 719 and/or bank switches 715 and one or more devices in computer room 720 (e.g., a corresponding server). Such middleware servers can provide various useful functions, including but not limited to the filtering and/or aggregation of data received from switches, from individual gaming machines and from other devices. Some implementations of the disclosure include load-balancing methods and devices for managing network traffic.

Storage devices 711, sb™ server 730, License Manager 731, Arbiter 733, servers 732, 734, 736 and 738, host device(s) 760 and main network device 725 are disposed within computer room 720 of gaming establishment 705. In practice, more or fewer devices may be used. Depending on the implementation, some such devices may reside in gaming establishment 705 or elsewhere.

One or more devices in central system 763 may also be configured to perform, at least in part, tasks specific to the present disclosure. For example, one or more servers 762, arbiter 733, storage devices 764 and/or host devices 760 of central system 763 may be configured to implement the functions described in detail elsewhere herein. These functions may include, but are not limited to, providing functionality for devices such as wager gaming machines 721, mobile devices 770, etc.

One or more of the servers of computer room 720 may be configured with software for receiving a player's wager gaming notification parameters, determining when a wagering condition corresponds with the wager gaming notification parameters and/or providing a notification to the player when the wagering condition corresponds with the wager gaming notification parameters. Moreover, one or more of the servers may be configured to receive, process and/or provide image data from cameras 709, to provide navigation data to patrons (e.g., to indicate the location of and/or directions to a gaming table, a wager gaming machine, etc., associated with a wager gaming notification), etc.

For example, navigation data (which may include map data, casino layout data, camera image data, etc.) may be provided by one or more of the servers of computer room 720 to mobile devices 770. Some implementations of the present disclosure include a plurality of networked cameras 709, which may be video cameras, smart cameras, digital still cameras, etc. In some such implementations, such cameras may provide, at least in part, real-time navigation.

Other devices that may be deployed in network 705 do not appear in Figure 7. For example, some gaming networks may include not only various radio frequency identification ("RFID") readers 717, but also RFID switches, middleware servers, etc., some of which are not depicted in Figure 7. These features may provide various functions. For example, a server (or another device) may determine a location of a mobile device 770 according to the location of an RFID reader that reads an RFID tag 727.

The servers and other devices indicated in Figure 7 may be configured for communication with other devices in or outside of gaming establishment 705, such as host devices 760, kiosks 777 and/or mobile devices 770, for implementing some methods described elsewhere herein. Servers (or the like) may facilitate communications with such devices, receive and store patron data, provide appropriate responses, etc., as described elsewhere herein.

Some of these servers may be configured to perform tasks relating to accounting, player loyalty, bonusing/progressives, configuration of gaming machines, etc. One or more such devices may be used to implement a casino management system, such as the IGT Advantage™ Casino System suite of applications, which provides instantaneous information that may be used for decision-making by casino managers. A Radius server and/or a DHCP server may also be configured for communication with the gaming network. Some implementations of the disclosure provide one or more of these servers in the form of blade servers.

Some embodiments of sb^{TM} server 730 and the other servers shown in Figure 7 include (or are at least in communication with) clustered CPUs, redundant storage devices, including backup storage devices, switches, etc. Such storage devices may include a "RAID" (originally redundant array of inexpensive disks, now also known as redundant array of independent disks) array, back-up hard drives and/or tape drives, etc.

In some implementations of the disclosure, many of these devices (including but not limited to License Manager 731, servers 732, 734, 736, and 738, and main network device 725) are mounted in a single rack with sb™ server 730. Accordingly, many or all such devices will sometimes be referenced in the aggregate as an "sb™ server." However, in alternative implementations, one or more of these devices is in communication with sb^{TM} server 730 and/or other devices of the network but located elsewhere. For example, some of the devices could be mounted in separate racks within computer room 720 or located elsewhere on the network. Moreover, it can be advantageous to store large volumes of data elsewhere via a storage area network ("SAN").

Computer room 720 may include one or more operator consoles or other host devices that are configured for communication with other devices within and outside of computer room 720. Such host devices may be provided with software, hardware and/or firmware for implementing various embodiments of the disclosure. However, such host devices need not be located within computer room 720. Wired host devices 760 (which are desktop and laptop computers in this example) and wireless devices 770 (which are mobile computing devices in this example) may be located elsewhere in gaming establishment 705 or at a remote location.

These and other aspects of the disclosure may be implemented by various types of hardware, software, firmware, etc. For example, some features of the disclosure may be implemented, at least in part, by machine-readable media that include program instructions, state information, etc., for performing various operations described herein. Examples of program instructions include both machine code, such as produced by a compiler, and files containing higher-level code that may be executed by the computer using an interpreter. Examples of machine-readable media include, but are not limited to, magnetic media such as hard disks, floppy disks, and magnetic tape; optical media such as CD-ROM disks; magneto-optical media; and hardware devices that are specially configured to store and perform program instructions, such as read-only memory devices ("ROM") and random access memory ("RAM").

Any of the above embodiments may be used alone or together with one another in any combination. Although various embodiments may have been motivated by various deficiencies with the prior art, which may be discussed or alluded to in one or more places in the specification, the embodiments do not necessarily address any of these deficiencies. In other words, different embodiments may address different deficiencies that may be discussed in the specification. Some embodiments may only partially address some deficiencies or just one deficiency that may be discussed in the specification, and some embodiments may not address any of these deficiencies. Indeed, it will be understood that unless features in any of the particular preferred embodiments are expressly identified as incompatible with one another or the surrounding context implies that they are mutually exclusive and not readily combinable in a complementary and/or supportive sense, the totality of this disclosure contemplates and envisions that specific features of those complementary embodiments can be selectively combined to provide one or more comprehensive, but slightly different, technical solutions.

While various embodiments have been described herein, it should be understood that they have been presented by way of example only, and not limitation. Thus, the breadth and scope of the present application should not be limited by any of the embodiments described herein, but should be defined only in accordance with the following and later-submitted claims and their equivalents.

## Claims

1. An electronic gaming machine comprising:
an input device configured to receive an indication of value for play of a wager-based game in which one or more game outcomes can be provided responsive to a wager;
an output device configured to output an indication of value in association with play of the wager-based game;
a display screen configured to display video data associated with the wager-based game; and
one or more processors configured to cause the electronic gaming machine to:
transmit a login code from the electronic gaming machine to a mobile computing device via wireless communication;
receive an account authentication message transmitted from the mobile computing via wireless communication, the account authentication message comprising:
(a) the login code,
(b) an account identification portion that identifies a user account, and
(c) an account authentication portion capable of being used to authenticate the user account; and
based on the account authentication message, authenticate the user account at the electronic gaming machine.

2. The electronic gaming machine recited in claim 1, wherein transmitting the login code from the electronic gaming machine to the mobile computing device comprises:
presenting indicia on a display screen associated with the electronic gaming machine, the indicia encoding the login code, the indicia capable of being read by a camera at the mobile computing device, the indicia preferably comprising a barcode.

3. The electronic gaming machine recited in claim 1 or 2, the one or more processors further configured to cause the electronic gaming machine to:
determine whether the login code included in the account authentication message matches the login code transmitted from the electronic gaming machine to the mobile computing device; and/or
determine whether the account authentication portion matches account authentication information associated with the user account identified by the account identification portion.

4. The electronic gaming machine recited in any preceding claim, wherein the login code comprises a gaming machine identification portion that identifies the electronic gaming machine and a random portion that is randomly generated.

5. The electronic gaming machine recited in any preceding claim, wherein the login code includes the account identification portion.

6. A method comprising:
transmitting a login code from an electronic gaming machine to a mobile computing device via wireless communication;
receiving, at the electronic gaming machine, an account authentication message transmitted from the mobile computing via wireless communication, the account authentication message comprising:
(a) the login code,
(b) an account identification portion that identifies a user account, and
(c) an account authentication portion capable of being used to authenticate the user account; and
based on the account authentication message, authenticating the user account at the electronic gaming machine.

7. The method recited in claim 6, wherein transmitting the login code from the electronic gaming machine to the mobile computing device comprises:
presenting indicia on a display screen associated with the electronic gaming machine, the indicia encoding the login code, the indicia capable of being read by a camera at the mobile computing device.

8. The method recited in claim 9, the method further comprising:
determining whether the login code included in the account authentication message matches the login code transmitted from the electronic gaming machine to the mobile computing device; and/or
determining whether the account authentication portion matches account authentication information associated with the user account identified by the account identification portion.

9. The method recited in claim 6, 7 or 8, wherein the login code comprises a gaming machine identification portion that identifies the electronic gaming machine and a random portion that is randomly generated.

10. The method recited in any of claims 6 to 9, wherein the login code includes the account identification portion.

11. The method recited in any of claims 6 to 10, wherein transmitting the login code from the electronic gaming machine to the mobile device comprises:
emitting near-field radio waves from the electronic gaming machine.

12. Computer readable media having instructions stored thereon for performing a method, the method comprising:
transmitting a login code from an electronic gaming machine to a mobile computing device via wireless communication;
receiving, at the electronic gaming machine, an account authentication message transmitted from the mobile computing via wireless communication, the account authentication message comprising:
(a) the login code,
(b) an account identification portion that identifies a user account, and
(c) an account authentication portion capable of being used to authenticate the user account; and
based on the account authentication message, authenticating the user account at the electronic gaming machine.

13. The computer readable media recited in claim 12, wherein transmitting the login code from the electronic gaming machine to the mobile computing device comprises:
presenting indicia on a display screen associated with the electronic gaming machine, the indicia encoding the login code, the indicia capable of being read by a camera at the mobile computing device.

14. The computer readable media recited in claim 12 or 13, further including instructions to:
determine whether the login code included in the account authentication message matches the login code transmitted from the electronic gaming machine to the mobile computing device.

15. The method recited in any of claims 6 to 11 or the computer readable media of any of claims 12 to 14, wherein the indicia comprises a barcode.
